Europäisches Patentamt

European Patent Office

Office européen des brevets

(11) Publication number : **0 671 371 A1**

## (12) EUROPEAN PATENT APPLICATION

(21) Application number : 95300750.7

(22) Date of filing : 07.02.95

(51) Int. Cl.[6] : **C04B 35/632**, C04B 35/01, C04B 35/56, C04B 35/58

(30) Priority : **14.02.94 US 195245**

(43) Date of publication of application :
**13.09.95 Bulletin 95/37**

(84) Designated Contracting States :
**DE ES FR GB IT**

(71) Applicant : **ROHM AND HAAS COMPANY**
**100 Independence Mall West**
**Philadelphia, Pennsylvania 19106-2399 (US)**

(72) Inventor : **Tang, Xun**
**749 Castlewood Drive**
**Dresher, Pennsylvania 19025 (US)**

(74) Representative : **Tanner, James Percival et al**
**ROHM AND HAAS (UK) LTD.**
**European Operations Patent Department**
**Lennig House**
**2 Mason's Avenue**
**Croydon CR9 3NB (GB)**

(54) **Low foaming ceramic slip.**

(57)   The present invention provides a ceramic slip comprising oxide, carbide or nitride ceramic powder and a polymeric binder formulation which provides reduced foaming of the ceramic slip when compared to the use of conventional binder formulations. Reduced foaming in the slip results in ceramic parts having fewer defects than parts formed from ceramic slips made with conventional binders.

EP 0 671 371 A1

The present invention is concerned with a ceramic slip containing a polymeric binder formulation providing reduced foaming . Specifically, the present invention is concerned with a method for reducing foaming in a ceramic slip by incorporating into the ceramic slip a polymeric binder formulation containing at least one anionic surfactant.

Ceramic materials may be processed into solid objects from a slurry, called a ceramic slip. The ceramic slip is a liquid dispersion of one or more ceramic powders, a polymeric binder and any additives required for processing. In the processing of ceramic materials, binders are used to add strength to the material. Strength is important because it allows for machining of ceramic parts and allows the parts to be stacked on one another. The ceramic slip may be processed by casting for the formation of large parts such as for example turbine blades or toilet bowls. A slip may also be used to form a sheet or film in a process known as "tape casting". The formed ceramic parts are then heated to form a solid object. The heating of the ceramic parts is called "firing". Parts which have not yet been fired are called "green bodies".

Foaming of the formulated ceramic slip is a common problem during tape casting and slip casting. Foam in the slip causes voids in green bodies which may become defects in the fired part.

Although defoaming agents are available, they are not useful for many applications. The most commonly used defoaming agents, called "universal defoamers", are silicon based polymers. Silicon is unacceptable in electronic packings, which are made by ceramic tape casting. Other metal impurities such as sodium and zinc could also be introduced into the defoaming agents during their manufacture. In addition, universal defoaming agents are not effective in many ceramic materials, because in order to perform their function the defoaming agents must diffuse into the foam. As the viscosity of the ceramic slip increases, the ability of the defoaming agents to diffuse decreases, limiting the applicability of the universal defoaming agents.

One method for removing foam from a ceramic slip during production of a sheet is disclosed in Japanese Patent Application 03-255158A, whereby a carrier film is coated with a ceramic slip which contains a ceramic powder, water, other additives including a binder, and a solvent. Foam is separated from the slip by means of a membrane filter tube attached to a vacuum chamber.

The method of Japanese Patent Application 03-255158A has several disadvantages: it increases the cost of processing a ceramic material; it is not time-efficient; and the method may result in agglomeration of the ceramic material. The method increases processing costs because it requires the use of a vacuum pump and membrane filters. Processing time may be unacceptably long because for efficient removal of bubbles from the slip, the slip must pass through the membrane tube slowly in order to allow sufficient time for the bubbles to diffuse to the membrane. Finally, the vacuum applied increases the shear force experienced by the slip adjacent to the membrane tube. This increased shear force may cause agglomeration of ceramic powder in the slip. The method is also limited to the formation of a sheet, and is therefore not applicable to slip casting of large parts.

The present invention seeks to reduce foaming in a ceramic slip whilst avoiding the disadvantages of the above known defoaming techniques and without the need for special equipment.

According to the present invention there is provided a ceramic slip, which comprises ceramic powder and a binder formulation comprising at least one polymeric binder and at least one anionic surfactant.

According to the present invention there is also provided a solid ceramic green body formed from a ceramic slip of the invention.

According to the present invention there is further provided a method for providing reduced foaming in a ceramic slip, said method comprising mixing:

(a). ceramic powder; and

(b). a binder formulation comprising at least one polymeric binder and at least one anionic surfactant.

The present invention still further provides the use of a binder formulation, comprising at least one polymeric binder and at least one anionic surfactant, to reduce foaming in a ceramic slip comprising ceramic powder.

The ceramic slips according to the present invention typically exhibit a measurable foam decay time of less than 30 minutes.

The term "binder formulation", as used herein refers, to a liquid containing at least one polymeric binder and at least one anionic surfactant. The polymeric binder formulation is in the form of a liquid dispersion, which may be the result of emulsion polymerization of the monomers used to make the polymeric binder(s), or may be made by forming a liquid dispersion of the polymeric binder(s) following polymerization. The liquid may be an organic medium, an aqueous medium, or a combination thereof.

The ceramic slip may be prepared from the binder formulation and ceramic powder in an organic medium an aqueous medium, or a combination of such media. To obtain the least amount of foaming, it is preferable to use an aqueous medium.

The total solid material content of the binder formulation is preferably within the range of from about 5 percent by weight to about 70 percent by weight, and more preferably within the range of from about 45 percent by weight to about 55 percent by weight, based on the total weight of binder formulation.

The amount of binder formulation to be used in the ceramic slip is determined based on the solid material content of the binder formulation and the total solid material content of the ceramic slip. The total solid material content of the slip includes the ceramic powder, binder, anionic surfactant and optional additives such as dispersant. The amount of binder formulation added should preferably be such that the solid material due to the binder formulation is within the range from about 0.5 percent by weight to about 25 percent by weight, and more preferably from about 3 percent by weight to about 5 percent by weight, based on the total solid material in the slip.

Polymeric binders for use in the present invention preferably have a glass transition temperature ($T_g$) within the range of from about -50 °C to about +100 °C, more preferably within the range of from -20 °C to +50 °C. Acrylic polymers, useful as low foaming binders, include polymers comprising, as polymerized units, at least one monomer selected from the group consisting of alkyl esters of acrylic and methacrylic acids such as for example methyl, propyl, isopropyl, butyl, isobutyl, sec-butyl, amyl, isoamyl, tert-amyl, hexyl, cyclohexyl, 2-ethylhexyl, octyl, decyl, lauryl, myristyl, cetyl and stearyl esters of acrylic and methacrylic acids. Binders may also be prepared from other monoethylenically unsaturated polymerizable monomers such as for example vinylidene halides, vinyl halides, acrylonitrile, methacrylonitrile, vinyl esters such as for example vinyl formate, vinyl acetate and vinyl propionate; styrene; and hydroxy functional vinyl monomers.

In one embodiment of the present invention the polymeric binder(s) comprise(s), for example substantially comprises, as polymerized units, at least one monoethylenically unsaturated monomer selected from the group consisting of vinyl esters, styrene, hydroxy functional vinyl monomers, alkyl esters of acrylic acid and alkyl esters of methacrylic acid.

In another embodiment of the present invention the polymeric binder(s) comprise(s), for example substantially comprises, as polymerized units, at least one monoethylenically unsaturated monomer selected from the group consisting of vinyl esters, styrene and hydroxy functional vinyl monomers.

In yet another embodiment of the present invention the polymeric binder(s) comprise(s), for example substantially comprises, as polymerized units, at least one monomer selected from the group consisting of alkyl esters of acrylic acid and alkyl esters of methacrylic acid.

Binders useful in this invention include any polymer normally used as a binder which can be prepared by emulsion polymerization, or any polymer normally used as a binder which can be prepared by another polymerization technique such as for example suspension polymerization and then processed to form an emulsion. If the polymeric binder is formed by a technique other than emulsion polymerization, a surfactant is required to form an emulsion. According to the method of this invention, the surfactant is an anionic surfactant.

The method of this invention may be used with oxide ceramics or non-oxide ceramics. Oxide ceramics are ceramic materials containing oxygen, such as for example alumina, zirconia, silica, titania, barium titanate and cordierite. Non-oxide ceramics are ceramic materials which do not contain oxygen in the bulk of the ceramic material, such as for example silicon carbide, silicon nitride, boron nitride, boron carbide, and aluminum nitride. It is preferred that this method be used with oxide ceramics.

In one embodiment of the present invention the ceramic powder is selected from the group consisting of alumina, zirconia, silica, cordierite, silicon carbide, silicon nitride, boron nitride, boron carbide and aluminum nitride.

Anionic surfactants suitable for use in this invention include fatty alcohol surfactants, such as for example sodium alkyl sulfate, ammonium alkyl sulfate; alkylaryl sulfonates such as for example sodium, ammonium or potassium aromatic alkyl sulfonates; sulfonated esters; organic phosphate esters and alkyl ether sulfonated salts. Suitable anionic surfactants may also be polymeric surfactants, such as for example sodium or ammonium salts of alkylaryl polyether sulfate; ammonium salt of sulfated nonylphenoxy polyethyleneoxy ethanol; polyoxyethylene nonylphenol ether phosphate and the like. In applications where sodium concentration is of concern, such as for example tape casting of electronic packaging materials, it is preferable to use anionic surfactant(s) containing an ammonium salt rather than a sodium salt.

In one embodiment of the present invention the anionic surfactant(s) is/are selected from the group consisting of fatty alcohol sulfates; alkylaryl sulfonates selected from the group consisting of sodium, ammonium and potassium aromatic alkyl sulfonates; sulfonated esters; organic phosphate esters and alkyl ether sulfonated salts.

The concentration of the anionic surfactant(s) to be used in the binder formulation is preferably in the range of from 0.1 percent by weight to 20 percent by weight, and more preferably from about 0.5 percent to about 2.5 percent by weight, based on the weight of the polymeric binder.

Ceramic slips according to the present invention preferably have a solid material content above about 70 percent by weight, which content is considered high for aqueous binders, but without the foaming which normally occurs with aqueous binders. A high solid content is desirable in a ceramic slip because it reduces shrinkage during casting.

In general, it is preferred to use a dispersant for the ceramic powder in the ceramic slip to minimize agglomerates of the ceramic powder. Dispersants for ceramic powders are typically ammonium or sodium salts of vinyl acids, such as for example the ammonium or sodium salt of polyacrylic acid or poly methacrylic acid. The presence of agglomerates adversely affects the physical properties of parts formed from the ceramic powder, such as green strength and green density. Green strength and green density are discussed herein below.

One method for forming a low foaming ceramic slip using a polymeric binder which is made with, and therefore contains, an anionic surfactant, comprises firstly adding an aqueous solution of dispersant material to an appropriate amount of ceramic powder, such that the total dispersant is about 1 percent of the total weight of solid material. Water is added, and the mixture is mixed, such as by ball milling, for about 40 to 60 minutes, until agglomerates of ceramic powder are broken up. The breakdown of agglomerates may be monitored by measurement of powder particle size. The amount of water added is dependent upon the specific application. The polymeric binder is then added in the desired quantity to form a slurry, which is the slip. The ceramic slip may then be mixed for an additional 30 to 45 minutes, to ensure complete mixing.

The ceramic slip according to the present invention may be used in any typical ceramic processing step, such as for example slip casting or tape casting.

A ceramic slip is classified as "low foaming" or "high foaming" based on the measured decay time of foam generated in a laboratory measurement. For the purposes of this invention, the measurement was performed by placing a measured amount, for example 10 milliliters (ml) , of a binder formulation into a graduated cylinder. Foam was generated by flowing nitrogen gas into the binder. In a 50 ml cylinder, nitrogen was flowed into 10 ml of the binder formulation until foam reached the 50 ml mark. The time required for the foam to decay to the 12 ml mark was then recorded as the foam decay time. A binder formulation is considered "low foaming" if the decay time obtained by this method is less than 50 minutes. Alternatively, the measurement may be carried out on a formulated ceramic slip containing the binder formulation, using the same technique. A ceramic slip is considered to be "low foaming" if the foam decay time as measured by this method is less than 30 minutes. If the foam decay time is less than 5 minutes, the slip is said to be "non-foaming".

A ceramic slip formulated in the manner of this invention will generally provide a ceramic green body having a green strength comparable to or greater than that of ceramic slips formed with standard binder formulations. The green strength is a property of a ceramic green body which is used as a quantitative evaluation of performance of the green body. The green strength is measured by applying a load to a pellet or tablet. The pellet or tablet is formed by dry pressing the ceramic powder which is obtained by spray drying or otherwise removing the liquid from a ceramic slip. The load applied to the pellet or tablet is incrementally increased until the pellet or tablet fractures. The load which is required to fracture the pellet or tablet is recorded as the green strength. Green strength values determined for ceramic formulations made in the manner of this invention are shown in Table 3. The desired green strength for a ceramic green body is determined by the particular application in which the binder formulation will be used. In general it is preferable to provide ceramic green bodies having a green strength of at least about 200 kilo Pascal (kPa), most preferably at least about 400 kPa.

Also shown in Table 3 is the "green density", which is the density of the solid material in the ceramic slurry. The solid material is separated from the liquid in the ceramic slurry in order to determine the green density. This may be accomplished by spray drying the ceramic slurry. The dry powder obtained from the separation is then pressed to form a pellet or tablet of known dimension. The density of the dry powder is then obtained by measuring the weight of the pellet or tablet and dividing the weight of the pellet or tablet by the volume of the pellet or tablet. The value presented in the Table is the "relative density", or the density of the dry powder relative to the density of a single crystal of alumina. In general it is preferable to provide ceramic green bodies having a relative density of at least about 30 percent, preferably at least about 40 percent.

Some embodiments of the present invention will now be described in detail in the following Examples.

## EXAMPLES

## EXAMPLE 1

## PREPARATION OF BINDER FORMULATIONS

### Preparation of monomer emulsion

To 217 g of $H_2O$, were added 7.6 grams (g) of a 58 percent by weight aqueous solution of the ammonium salt of sulfated nonylphenoxy poly(ethyleneoxy) ethanol surfactant. After the surfactant was completely dissolved, 391.7 g of butyl acrylate then 306.3 g of methyl methacrylate were slowly added into the solution with vigorous stirring to form an emulsion. Finally 14.24 g of glacial methacrylic acid were then slowly added to the emulsion with stirring.

## Preparation of cofeed initiator solution

In 50 g of doubly deionized $H_2O$, 0.8 g of ammonium persulfate was dissolved. This solution was used as the cofeed initiator.

## Polymerization

To a 2000 ml four neck round bottomed flask equipped with stirrer and reflux condenser, 360 g of $H_2O$ were added. A solution consisting of 4.9 g of a 58 percent by weight solution of the ammonium salt of sulfated nonylphenoxy poly(ethyleneoxy) ethanol surfactant and 15 g of doubly deionized $H_2O$ was also added to the flask. Moderate agitation was achieved with an overhead agitator equipped with a single Teflon blade and $N_2$ was passed through the reactor above the solution. The reactor was heated to 82-84 °C for 15 minutes, then 80 g of the monomer emulsion, prepared as described above, were then added to the reactor. One minute later, a solution containing 2.375 g of ammonium persulfate dissolved in 6.5 g of doubly deionized $H_2O$ was added dropwise. Polymerization was initiated within 3-5 minutes as indicated by a noticeable increase of temperature (approximately 5-10 °C). After peak temperature, the monomer emulsion and the cofeed initiator were added at a rate of 2.5 g per minute and 0.15 ml per minute, respectively. After 20 minutes, the flow rates were increased to 5 g per minute and 0.28 ml per minute, respectively. After the cofeeding was completed, the polymerization was held at 81-83 °C for 15 minutes, and then cooled to 60 °C. A solution containing 2.96 g of 0.15% $FeSO_4.7H_2O$ diluted with 0.5 g of doubly deionized $H_2O$ was added dropwise. Then, a solution consisting of 0.325 g of a 70 percent (by weight) t-butyl hydroperoxide aqueous solution diluted with 2 g of doubly deionized $H_2O$ was added dropwise. This was immediately followed by the addition of another prepared solution containing 0.2 g of L-ascorbic acid dissolved in 5 g of doubly deionized $H_2O$. After 15 minutes, another addition was made of t-butyl hydroperoxide solution and L-ascorbic acid solution prepared as described above, and a third addition was carried out 15 minutes later. The reactor was then cooled to room temperature. The pH of the emulsion polymer was adjusted to 9-9.5. by adding approximately 8 g of 28 percent by weight aqueous solution of ammonium hydroxide over a 5 minute period. Finally the polymer was filtered through 100 mesh sieve. The total solid concentration was adjusted to 49-50 percent by the addition of doubly deionized $H_2O$.

## EXAMPLE 2

### Formulation and Preparation of Alumina Slip

To 100 grams (g) of alumina powder (Alcoa A-16), 40 g of deionized water and 2 g of a 44.2 percent by weight solution of the ammonium salt of poly(acrylic acid) were added as a dispersant. The mixture was ball milled for 45-60 minutes to form a slurry and 8 to 10 g of a binder formulation prepared as in Example 1 was added. The slurry was then ball milled for an additional 30 min. Foam decay time was then measured as described in Example 3.

## EXAMPLE 3

### Foam Decay Measurements

A) Emulsion Binder Formulations

To a 50 milliliter (ml) graduated cylinder was added 10 ml of an emulsion binder formulation which was 10 percent by weight polymer solids. Nitrogen was flowed at a constant rate of 0.4 liters per minute through a gas dispersion tube (12C, 40-60 ASTM). The gas dispersion tube was then immersed into the emulsion in the graduated cylinder to generate foam. When the foam had risen to the 50 ml mark, the gas dispersion tube was immediately removed and time recording was begun. The time required for the foam to decay to the 12 ml mark was recorded as the "foam decay time".

B) Formulated Alumina Slurry

All conditions and procedures are the same as for the measurement of foam decay time in the binder formulation, but with 10 ml of the formulated alumina slurry (prepared as in Example 2, above) being tested instead of 10 ml of emulsion binder formulation (comparative) alone.

In Table 1 below, data are presented for foam decay times for binder formulations prepared according to the method of Example 1 and evaluated using the method described in Example 3. The first column of data is for binder formulations only; the second column of data is for binder formulations formulated with alumina to form a ceramic slip as in Example 2.

## TABLE 1
### Comparison of Foam Decay Times for Binder Formulations containing Anionic or Nonionic (Comparative) Surfactant

| Sample No. | surfactant type | Foam decay (minutes) | |
| --- | --- | --- | --- |
| | | | Ceramic Slip (binder formulation formulated with |
| | | binder formulation | alumina ceramic |
| | | only (comparative) | powder) |
| (Comparative)1 | octylphenoxy polyethoxy ethanol (nonionic, low MW) | 214 | 200 |
| (Comparative)2 | octylphenoxy polyethoxy ethanol (nonionic, high MW) | 183 | 129 |
| (Comparative)3 | octylphenoxy polyethoxy ethanol (nonionic, high MW) | 178 | 153 |
| 4 | sodium dodecylbenzene sulfonate (anionic) | 35 | 4 |
| 5 | sodium dodecylbenzene sulfonate (anionic) | 85 | 5 |

| 6 | sodium dodecylbenzene sulfonate (anionic) | 137 | 21 |
|---|---|---|---|
| 7 | sodium lauryl sulfate (anionic) | 162 | 24 |
| 8 | Ammonium salt of sulfated nonylphenoxy poly(ethyleneoxy) ethanol (anionic) | 22 | 3 |
| 9 | Ammonium salt of sulfated nonylphenoxy poly(ethyleneoxy) ethanol (anionic) | 92 | 1 |
| 10 | Ammonium salt of sulfated nonylphenoxy poly(ethyleneoxy) ethanol (anionic) | 133 | 2.2 |
| 11 | Ammonium salt of sulfated nonylphenoxy poly(ethyleneoxy) ethanol (anionic) | 141 | 1.4 |

The data show that binder formulations containing anionic surfactants (and ceramic slips formed using such binder formulations) have foam decay times which are significantly lower than those for binder formulations containing nonionic surfactants (and ceramic slips formed using such binder formulations).

In Table 2 below, data are presented for foam decay times for ceramic slips containing binder formulations prepared according to the method of Example 2 (both the ceramic slips according to the present invention and the comparative ceramic slips of Table 2 were prepared using the procedure of Example 2) and evaluated using the method described above in Example 3.

TABLE 2

Comparison of Foam Decay Times for Ceramic Slips Containig Low Foaming
Binder Formulations With Foam Decay Times for Ceramic Slips Containing
Commercial Binders

| Ceramic Slip | Foam Decay (minutes) |
|---|---|
| 9 | 1 |
| 10 | 2.2 |
| 11 | 1.4 |
| | |
| (Comparative) Poly (vinyl alcohol)[1] | 61 |
| (Comparative) Poly (ethylene glycol)[2] | 19 |
| (Comparative) aqueous dispersion polyvinyl butyral[3] | 90 |

[1]Airvol 205, available from Air Products

[2]Carbowax 20M, available from Union Carbide

[3]Butvar , available from Monsanto

The data show that the use of binder formulations containing anionic surfactants have foam decay times which are significantly lower than those for several ceramic slips containing conventional binders commonly used in the industry.

## TABLE 3

### Green Density and Green Strength*

| Ceramic slip used to prepare the spray dried powder | Relative Density (%)** | Green Strength (KPa) |
|---|---|---|
| 4 | 55.90 ± 0.27 | 444.0 ± 18.3 |
| 5 | 55.59 ± 0.33 | 323.5 ± 15.4 |
| 9 | 54.27 ± 0.19 | 765.4 ± 35.0 |
| 10 | 53.24 ± 0.03 | 834.9 ± 62.5 |
| 11 | 53.34 ± 0.05 | 580.1 ± 14.5 |

*Slip formulation contains 0.84% (wt) dispersant and 4.4% (wt) corresponding binder.

**The density has been corrected to exclude any organics added and is expressed as a percentage of 3.965, the density of single crystal alumina.

The data in Table 3 show that the use of binder formulations containing anionic surfactants gives rise to green strength and green density values acceptable in the industry.

Airvol, Carbowax and Butvar are trademarks which may be registered in one or more of the designated countries.

## Claims

1. A ceramic slip, which comprises ceramic powder and a binder formulation comprising at least one polymeric binder and at least one anionic surfactant.

2. A ceramic slip as claimed in claim 1, wherein the anionic surfactant(s) has/have a concentration in the binder formulation of from 0.1 percent by weight to 20 percent by weight, based on the weight of the polymeric binder(s).

3. A ceramic slip as claimed in claim 1 or claim 2, wherein the polymeric binder(s) comprise(s), as polymerized units, at least one monoethylenically unsaturated monomer selected from the group consisting of vinyl esters, styrene, hydroxy functional vinyl monomers, alkyl esters of acrylic acid and alkyl esters of methacrylic acid.

4. A ceramic slip as claimed in claim 3, wherein the polymeric binder(s) comprise(s), as polymerized units, at least one monoethylenically unsaturated monomer selected from the group consisting of vinyl esters, styrene and hydroxy functional vinyl monomers.

5. A ceramic slip as claimed in claim 3, wherein the polymeric binder(s) comprise(s), as polymerized units, at least one monomer selected from the group consisting of alkyl esters of acrylic acid and alkyl esters of methacrylic acid.

6. A ceramic slip as claimed in any preceding claim, wherein the anionic surfactant(s) is/are:-
   (i). selected from the group consisting of fatty alcohol surfactants, alkylaryl sulfonates, sulfonated esters, organic phosphate esters and alkyl ether sulfonated salts; or
   (ii). selected from the group consisting of polymeric surfactants.

7. A ceramic slip as claimed in claim 6, wherein the anionic surfactant(s) is/are selected from the group consisting of fatty alcohol sulfates; alkylaryl sulfonates selected from the group consisting of sodium, ammonium and potassium aromatic alkyl sulfonates; sulfonated esters; organic phosphate esters and alkyl ether sulfonated salts.

8. A ceramic slip as claimed in any preceding claim, wherein the ceramic powder is an oxide ceramic.

9. A ceramic slip as claimed in of claims 1 to 7, wherein the ceramic powder is selected from the group consisting of alumina, zirconia, silica, cordierite, silicon carbide, silicon nitride, boron nitride, boron carbide and aluminum nitride.

10. A solid ceramic green body formed from a ceramic slip as claimed in any preceding claim.

11. A method for providing reduced foaming in a ceramic slip, said method comprising mixing:
   (a). ceramic powder, for example, a ceramic powder as defined in claim 8 or claim 9; and
   (b). a binder formulation as defined in any of claims 1 to 7.

12. Use of a binder formulation as defined in any of claims 1 to 7 to reduce foaming in a ceramic slip comprising ceramic powder.

**European Patent Office**

# EUROPEAN SEARCH REPORT

Application Number

EP 95 30 0750

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 369 045 (HOECHST AG) <br> * page 4, line 53 - page 6, line 45 * <br> * claims; examples * <br> --- | 1-12 | C04B35/632 <br> C04B35/01 <br> C04B35/56 <br> C04B35/58 |
| X | WO-A-88 07505 (CERAMICS PROCESS SYSTEMS) <br> * page 7, line 27 - page 8, line 9; claims * <br> --- | 1-12 | |
| X | US-A-3 991 029 (R.L. ADELMAN) <br> * column 5, line 44 - column 6, line 27 * <br> * claims * <br> --- | 1-6,8-12 | |
| A | EP-A-0 416 518 (IDEMITSU KOSAN COMP LTD) <br> * page 5, line 34 - line 38; claims; example 1 * <br> --- | 1-12 | |
| A | EP-A-0 532 114 (PHILIPS PATENTVERWALTUNG GMBH) <br> * page 3, line 5 - line 58; claims * <br> --- | 1-12 | |
| A | EP-A-0 425 879 (DEGUSSA AG) <br> * column 7, line 35 - column 8, line 23 * <br> * claims; example * <br> --- | 1-12 | TECHNICAL FIELDS SEARCHED (Int.Cl.6) <br><br> C04B <br> H05K |
| A | EP-A-0 329 475 (SANYO CHEM IND LTD) <br> * page 6, line 35 - line 40; claims 1-8 * <br> --- | 1-12 | |
| D,A | PATENT ABSTRACTS OF JAPAN <br> vol. 16 no. 54 (C-0909) ,12 February 1992 <br> & JP-A-03 255158 (ONODA CEMENT CO LTD) <br> 14 November 1991, <br> * abstract * <br> ----- | 1 | |

The present search report has been drawn up for all claims

| Place of search | Date of completion of the search | Examiner |
|---|---|---|
| BERLIN | 26 May 1995 | Kuehne, H-C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)